# EUROPÄISCHE PATENTSCHRIFT

(11) **EP 0 474 894 B1**
(45) Veröffentlichungstag und Bekanntmachung des Hinweises auf die Patenterteilung: **22.03.1995**
(21) Anmeldenummer: 90117376.5
(22) Anmeldetag: 10.09.1990
(51) Int. Cl.: F02C 3/02

(54) **Gasturbinenanordnung**
Gas turbine plant
Installation de turbine à gaz

(43) Veröffentlichungstag der Anmeldung: 18.03.1992
(73) Patentinhaber: ASEA BROWN BOVERI AG, 5400 Baden (CH)
(72) Erfinder: Keller, Jakob, Dr., CH-5605 Dottikon (CH)

(56) Entgegenhaltungen:
- EP-A- 0 179 233
- CH-A- 229 280
- GB-A- 987 644

## Beschreibung

### TECHNISCHES GEBIET

Bei der Erfindung wird ausgegangen von einer Gasturbinenanordnung nach dem Oberbegriff des Patentanspruchs 1. Eine solche Gasturbinenanordnung weist einen Verdichter für die Verbrennungsluft und mindestens eine Gasturbine auf. Eine Druckwellenmaschine ist als Energietauscher vorgesehen, welcher eine separate Brennkammer unmittelbar vorgeschaltet ist.

### STAND DER TECHNIK

Eine Gasturbinenanordnung der eingangs genannten Art ist beispielsweise aus EP-0 179 233 B1 bekannt. Bei dieser Gasturbinenanordnung ist ein Energietauscher der Gasturbine vorgeschaltet, welcher Verbrennungsluft, die in einem Niederdruckverdichter vorverdichtet wurde, auf ein noch höheres Druckniveau bringt. Eine separate Brennkammer ist dem Energietauscher vorgeschaltet, die mit Gas oder Öl als Brennstoff betrieben wird und deren Verbrennungsluft aus einem Hochdruckkanal für die aufgeladene Luft auf dem höheren Druckniveau nach dem Energietauscher abgezweigt wird. Der Hochdruckkanal führt den Hauptteil der aufgeladenen Luft in eine Brennkammer, in der Gas oder Öl zusammen mit dieser Luft verbrannt werden zu Treibgas unter hohem Druck und hoher Temperatur, welches in einen Hochdruckteil der Gasturbine eingeleitet wird und diesen antreibt. Die etwas abgekühlten und etwas entspannten Gase, die im Energietauscher einen Teil ihrer Energie für die Aufladung der Verbrennungsluft abgegeben haben, werden nach ihrem Austritt in einen Basisteil der Gasturbine eingeleitet, wo sie mit dem im Hochdruckteil entspannten Treibgas vermischt werden und zusammen mit diesem die Gasturbine weiter antreiben.

Bei dieser Gasturbinenanordnung wird der Energietauscher mit einer vergleichsweise niedrigen Betriebstemperatur gefahren. Bei höheren Betriebstemperaturen wäre eine zusätzliche Wirkungsgraderhöhung der Anordnung möglich.

### DARSTELLUNG DER ERFINDUNG

Hier will die Erfindung Abhilfe schaffen. Die Erfindung, wie sie in den Ansprüchen gekennzeichnet ist, löst die Aufgabe, eine Gasturbinenanordnung zu schaffen, bei welcher mit einfachen Mitteln ein erhöhter Wirkungsgrad erreicht wird und welche sich einfacher regeln lässt. Ferner soll ein Verfahren zu deren Betrieb angegeben werden.

Die durch die Erfindung erreichten Vorteile sind im wesentlichen darin zu sehen, dass durch zwei unabhängig voneinander steuerbare Brennkammern besonders günstige Wirkungsgrade auch bei Teillastbetrieb erreicht werden können. Als besonders vorteilhaft erweist es sich, dass trotz der vergleichsweise sehr hohen Verbrennungstemperaturen die NOₓ-Bildung kaum ins Gewicht fällt, da sich die Gase im Bereich der hohen Temperaturen im Nachbrenner nur extrem kurzzeitig aufhalten, sodass hier insgesamt weniger NOₓ erzeugt wird als bei vergleichbaren Anordnungen. Ausserdem wird mit Hilfe des Drucktauschers vermieden, dass die heissen Gase aus dem Nachbrenner Gehäuseteile unzulässig erwärmen können.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen Ausführungsweg darstellt, näher erläutert.

### KURZE BESCHREIBUNG DER ZEICHNUNG

Es zeigen:
- Fig. 1: eine Prinzipskizze einer ersten Gasturbinenanordnung,
- Fig. 2: eine Prinzipskizze einer zweiten Gasturbinenanordnung, und
- Fig. 3: eine Prinzipskizze einer dritten Gasturbinenanordnung.

Bei allen Figuren sind gleich wirkende Elemente mit gleichen Bezugszeichen versehen.

### WEGE ZUR AUSFÜHRUNG DER ERFINDUNG

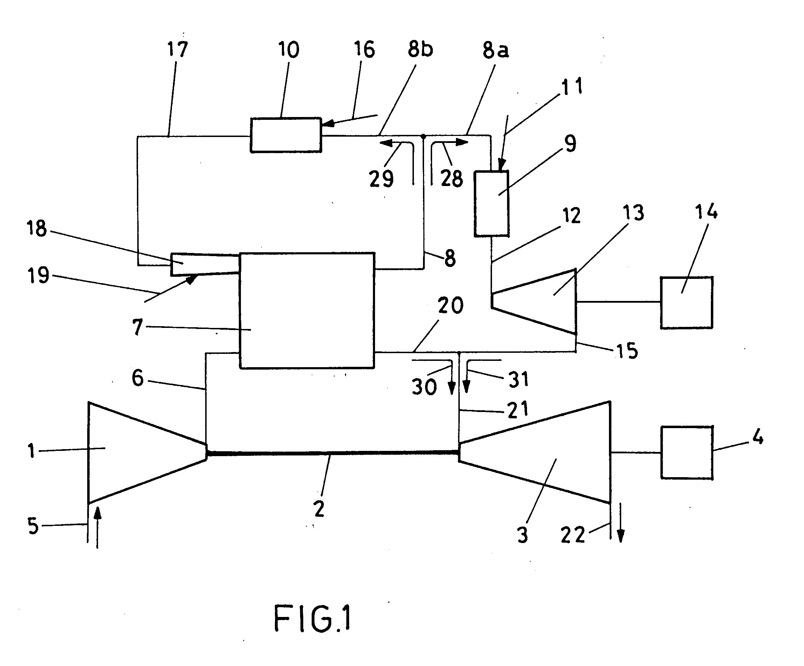

In der Fig. 1 ist eine Prinzipskizze einer erfindungsgemässen Gasturbinenanordnung dargestellt. Diese Gasturbinenanordnung weist einen Verdichter 1 auf, der über eine Welle 2 von einer Basisturbine 3 angetrieben wird. Die Basisturbine 3 treibt zudem über eine Welle einen Generator 4 an. Durch eine Leitung 5 gelangt Luft in den Verdichter 1, die komprimierte Luft gelangt aus dem Verdichter 1 durch eine Leitung 6 in einen Energietauscher 7. Aus dem Energietauscher 7 gelangt die nun aufgeladene Luft durch eine Leitung 8, die sich in Zweige 8a und 8b aufteilt, in eine Brennkammeranordnung, welche zwei Brennkammern 9, 10 aufweist. Die Verzweigung der Leitung 8 kann steuerbar ausgelegt sein, sodass die Mengen der aufgeladenen Luft, die in die Leitung 8a bzw. die Leitung 8b strömen, abhängig von den Betriebsanforderungen an die Gasturbinenanordnung gesteuert werden können. Der ersten Brennkammer 9 wird, wie ein Pfeil 11 andeutet, Brennstoff zugeführt, und zusammen mit der Luft aus der Leitung 8a zu Treibgas verbrannt, welches durch eine Leitung 12 in eine Hochdruckturbine 13 eingeleitet wird. Die Hochdruckturbine 13 treibt über eine Welle einen Generator 14 an. Das zum Teil entspannte Treibgas verlässt die Hochdruckturbine durch eine Leitung 15.

Die Luft, welche durch die Leitung 8b strömt, wird in der Brennkammer 10 zusammen mit Brennstoff, die Brennstoffzufuhr deutet ein Pfeil 16 an, verbrannt. Die entstandenen Gase werden durch eine Leitung 17 in eine separate Brennkammer 18, die als Nachbrenner dient, geleitet. Wie ein Pfeil 19 andeutet, wird auch der Brennkammer 16 Brennstoff zugeführt und zusammen mit dem Gas aus der Leitung 17 verbrannt. Die Brennkammer 18 ist unmittelbar vor dem Energietauscher 7 angeordnet, sodass die erzeugten Treibgase direkt in den Energietauscher 7 gelangen können. Durch eine Leitung 20 treten die Treibgase aus dem Energietauscher 7 aus. Die Leitung 20 und die Leitung 15 vereinigen sich zu einer Leitung 21, welche die Treibgase in die Basisturbine 3 leitet. Die entspannten Gase verlassen die Basisturbine 3 durch eine Leitung 22. Die Basisturbine 3 kann ein oder mehrstufig ausgebildet sein. Die Leitung 22 kann auch in einen Wärmetauscher führen, wo den entspannten Gasen weitere nutzbare Wärmeenergie entzogen wird.

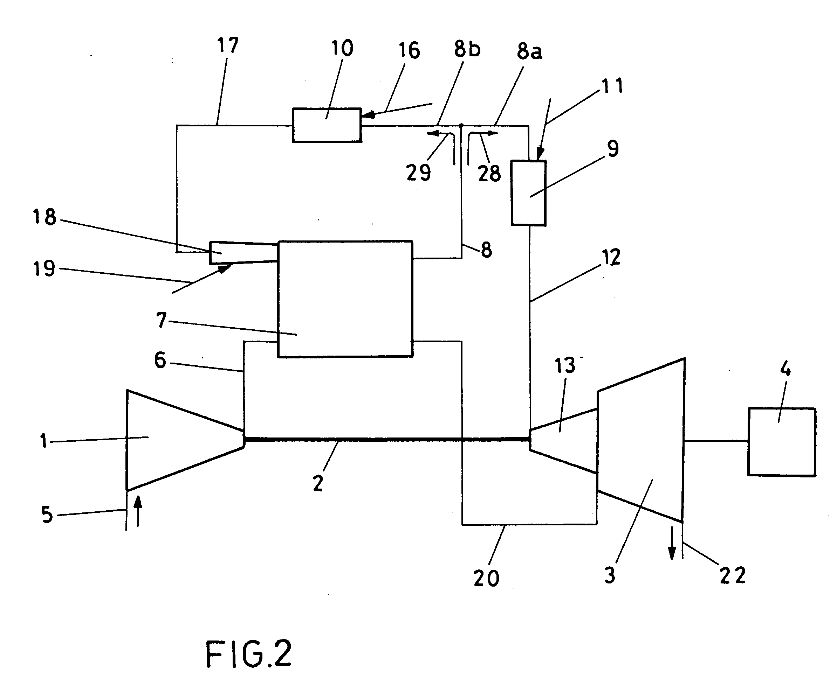

Fig. 2 zeigt eine weitere Ausführungsform einer Gasturbinenanordnung. Bei dieser Ausführungsform sind die Basisturbine 3 und die Hochdruckturbine 13 zu einer Baugruppe zusammengefasst, im übrigen deckt sich diese Ausführungsform mit derjenigen gemäss Fig. 1. Diese Baugruppe kann so gestaltet sein, dass die Hochdruckturbine 13 und die Basisturbine 3 auf einer gemeinsamen Welle sitzen und gemeinsam den Verdichter 1 und den Generator 4 antreiben, es ist aber auch möglich, dass die Hochdruckturbine 13 über ein nicht dargestelltes Getriebe mit der Basisturbine 3 gekoppelt ist.

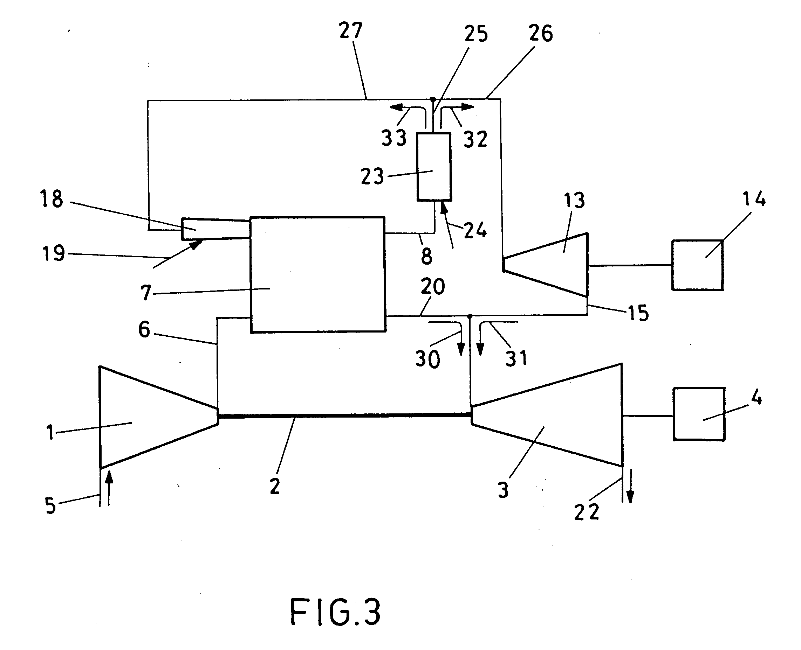

Fig. 3 zeigt eine gegenüber der Ausführungsform gemäss Fig. 1 etwas vereinfachte Gasturbinenanordnung. Dabei wird in der Brennkammeranordnung lediglich eine einzige Brennkammer 23 eingesetzt, der, wie der Pfeil 24 andeutet, Brennstoff zugeführt wird. Die durch die Leitung 8 zugeführte, aufgeladene Luft wird in der Brennkammer 23 zusammen mit dem Brennstoff verbrannt zu Treibgas. Das Treibgas wird durch eine Leitung 25 abgeführt. Die Leitung 25 verzweigt sich in eine Leitung 26, die in die Hochdruckturbine 13 führt, und in eine Leitung 27, welche in die separate Brennkammer 18 führt. Die Verzweigung der Leitung 25 kann steuerbar ausgelegt sein, sodass die Mengen des in die Leitung 26 bzw. die Leitung 27 strömenden Treibgases abhängig von den Betriebsanforderungen an die Gasturbinenanordnung gesteuert werden können. Der übrige Aufbau der Anordnung entspricht dem Aufbau gemäss Fig. 1.

Die separate Brennkammer 18 kann mit einer Injektionsmöglichkeit für Wasser oder Wasserdampf versehen sein, wodurch der Volumenfluss der in den Energietauscher 7 strömenden heissen Gase oder Gas-Dampf-Gemische erhöht wird. Diese Massnahme führt zu einer weiteren vorteilhaften Wirkungsgraderhöhung der Gasturbinenanordnung.

Zur Erläuterung der Wirkungsweise soll zunächst die Fig. 1 näher betrachtet werden. In dem Verdichter 1 wird Luft komprimiert und strömt von dort aus durch die Leitung 6 in den Energietauscher 7, wo sie weiter verdichtet wird. Der Energietauscher 7 ist als Druckwellenmaschine ausgebildet und seine Wirkungsweise ist als bekannt vorauszusetzen, er kann ein- oder mehrstufig ausgebildet sein. Angetrieben wird der Energietauscher 7 vorzugsweise durch ein- und ausströmende Gase, es ist jedoch auch möglich, ihn von der Basisturbine 3 aus anzutreiben oder ihn mit einem separaten Antrieb zu versehen. Die aufgeladene Luft auf einem höheren Druckniveau verlässt den Energietauscher 7 durch die Leitung 8. Die Leitung 8 verzweigt sich und ein erster Teil der aufgeladenen Luft strömt in die Leitung 8a, wie ein Pfeil 28 andeutet, ein zweiter Teil der aufgeladenen Luft fliesst, wie durch einen Pfeil 29 angedeutet, in die Leitung 8b. Diese Abzweigung kann so ausgebildet sein, dass stets immer der gleiche Mengenanteil abgezweigt wird, es ist jedoch auch möglich die Abzweigung steuerbar zu gestalten, sodass die abgezweigte Menge beispielsweise abhängig vom Betriebzustand der gesamten Gasturbinenanordnung verändert werden kann. In der Regel wird eine möglichst grosse Menge der erzeugten aufgeladenen Luft durch die Leitung 8b in die Brennkammer 10 abgeleitet. In der Brennkammer 10 wird diese Luft zusammen mit zugeführtem Brennstoff zu einem überstöchiometrischen Gemisch verwirbelt und zu Treibgas verbrannt. Das Treibgas, im Bereich um 1000 °C heiss, wird durch die Leitung 17 in die Brennkammer 18 geführt.

Das Treibgas weist noch einen genügenden Luftanteil auf, um in der Brennkammer 18 als Verbrennungsluft für den dort eingespeisten Brennstoff zu wirken. Die Brennkammer 18 wirkt demnach als eine Art Nachbrenner. Die Temperatur und der Druck des Treibgases werden in diesem Nachbrenner nochmals erhöht. Derartig hohe Temperaturen im Bereich oberhalb 1350 °C sind nur möglich, weil der Brennkammer 18 der rotierende Energietauscher 7 unmittelbar nachgeschaltet ist, in welchem sich, wegen der dort stattfindenden Energietauschvorgänge mit vergleichsweise kühler Luft, lediglich eine mittlere Temperatur und nicht die volle Temperatur des eintretenden Treibgases einstellt. Auf diese Weise kann zwar der hohe Energieinhalt des heissen Treibgases vorteilhaft ausgenutzt werden ohne dass jedoch diese hohen Temperaturen eine Gefährdung für die Festigkeit der damit beanspruchten Materialien darstellen. Weil die hohen Temperaturen nach der Brennkammer 18 nur für eine extrem kurze Zeit vorherrschen, kann sich trotz dieser hohen Temperaturen keine nennenswerte NOₓ-Menge bilden.

Im Bereich der Brennkammer 18 kann zudem Wasser oder Wasserdampf injektiert und mit dem heissen Treibgas vermischt werden. Dies führt zu einer Überhitzung des Wassers oder des Wasserdampfes und damit verbunden zu einer Erhöhung des die Brennkammer 18 verlassenden Volumenstroms. Die kinetische Energie dieses Volumenstroms wird im Energietauscher 7 dazu verwendet die im Verdichter 1 vorkomprimierte Luft auf das höhere Druckniveau zu bringen. Das den Volumenstrom bildende sehr heisse Gasgemisch wird, nachdem es sich im Energietauscher 7 entspannt und etwas abgekühlt hat, durch die Leitung 20 weggeführt, wie ein Pfeil 30 andeutet.

Über die Leitung 8a gelangt aufgeladene Luft in die Brennkammer 9, wo sie, zusammen mit dort eingespeisten Brennstoff, zu Treibgas verbrannt wird. Dieses Treibgas, welches unter vergleichsweise hohem Druck und einer Temperatur bis maximal etwa 1200 °C steht, treibt dann die Hochdruckturbine 13 an. Um diese nicht zu überhitzen, können in der Regel keine Temperaturen höher als 1200 °C gefahren werden. Der Wirkungsgrad dieser Anordnung kann deshalb nicht mit Hilfe einer Temperaturerhöhung gesteigert werden. Durch die Leitung 15 strömt das etwas entspannte und etwas abgekühlte Treibgas aus der Hochdruckturbine 13 heraus, wie ein Pfeil 31 andeutet. Weil bei einer mittleren Temperatur von 1200 °C vor der Hochdruckturbine 13 die höchsten Gastemperaturen etwa bei 1400 °C liegen dürften, darf in der Brennkammer 9 kein heisseres Treibgas erzeugt werden, da sonst zuviel NOₓ entstehen würde.

Dieses Treibgas und das durch die Leitung 20 aus dem Energietauscher 7 ausströmende heisse Gasgemisch weisen etwa die gleiche Temperatur und den gleichen Druck auf und sie werden miteinander vermischt und durch die Leitung 21 in die Basisturbine 3 geführt. Die Ausnutzung der restlichen Energie des Treibgases und der des Gasgemisches erfolgt hier in der Basisturbine 3, es ist jedoch möglich je nach Betriebskonzept der Gasturbinenanordnung, die Basisturbine 3 auch mehrstufig auszubilden. Durch die Leitung 22 verlässt das Teibgas die Basisturbine.

Bei einem Anfahrvorgang wird in dieser Gasturbinenanordnung zuerst die Brennkammer 10 gezündet und danach die Brennkammer 18. Die Brennkammer 18 wird dann soweit angesteuert, dass die erzeugte Menge Treibgas genügt, um nach dem Energietauscher 7 die Basisturbine 3 im Leerlauf zu betreiben. Soll nun die Leistung der Gasturbinenanordnung gesteigert werden, so wird zunächst die Brennkammer 18 weiter bis zu deren Leistungsgrenze angesteuert. Bei diesem unteren Teillastbetrieb gibt der Generator 4 bereits elektrische Energie ab. Soll die Leistungsabgabe der Gasturbinenanordnung noch weiter gesteigert werden, so wird die Strömung der komprimierten Druckluft in die Leitung 8a, wie sie der Pfeil 28 andeutet, freigegeben und der Brenner 9 wird danach gezündet. Die Ansteuerung wird weiter gesteigert bis zum vorgegebenen Sollwert der Leistungsabgabe. Da die abgegebene Leistung, um eine optimale Nutzung der Gasturbinenanlage zu erreichen, in der Regel im oberen Teillastbetrieb nahe dem Vollastbetrieb oder im Vollastbereich liegt, genügt es, lediglich die Brennkammer 9 anzusteuern und damit die abgegebene Leistung zu regeln. Im Grundlastbetrieb wird die Gasturbinenanordnung vorzugsweise nur über die Ansteuerung der Brennkammer 9 geregelt.

Dieses Verfahren zum Betreiben der Gasturbinenanordnung hat den Vorteil, dass der Energietauscher 7 fast immer unter nahezu konstanten Betriebsbedingungen betrieben wird. Damit wird der Zweig der Gasturbinenanordnung, der mit dem höchsten Wirkungsgrad arbeitet, nicht in seiner Funktion gestört und kann stets optimal arbeiten. Selbst im oberen Teillastbetrieb kann dieser Zweig absolut homogen weitergefahren werden, da Eingriffe zum Aussteuern kleinerer Abweichungen vom Sollwert, in den anderen, nicht mit diesem hohen Wirkungsgrad arbeitenden Zweig der Gasturbinenanordnung erfolgen. Im normalen Grundlastbetrieb und auch im oberen Teillastbetrieb weist diese Gasturbinenanordnung deshalb einen besonders hohen Wirkungsgrad auf. Die Gasturbinenanordnung gemäss Fig. 2 arbeitet gleich wie die eben beschriebene Anordnung.

Die Wirkungsweise der Gasturbinenanordnung gemäss Fig. 3 unterscheidet sich von der eben beschriebenen Anordnung dadurch, dass eine einzige Brennkammer 23 Treibgas erzeugt, und dass dieses Treibgas dann, wie Pfeile 32, 33 andeuten aufgeteilt wird. Ein Teil des Teibgases strömt, wie der Pfeil 32 andeutet, direkt in die Hochdruckturbine 13, ein weiterer Teil, wie der Pfeil 33 andeutet, in die Brennkammer 18. Beim Anfahren wird hier die Leitung 26 zunächst zweckmässigerweise abgeschlossen, um Energieverluste zu vermeiden. Erst im Bereich höherer Leistung, wenn die Hochdruckturbine 13 mit zur Energieerzeugung herangezogen wird, wird ihr Treibgas durch die Leitung 26 zugeführt. Die Menge dieses Treibgses wird durch erhöhte Brennstoffeinspeisung in die Brennkammer 23 erhöht. Durch diese steuerbare Brennstoffeinspeisung können Abweichungen vom Sollwert der erzeugten Leistung ausgeglichen werden. Die Schwankungen in der Menge des erzeugten Treibgases dürften sich auch geringfügig auf die Brennkammer 18 auswirken, allerdings überwiegen hier die wirtschaftlichen Vorteile, die sich aufgrund der in dieser Anordnung eingesparten Brennkammer ergeben. Der weitere Anhfahrbetrieb und der Grundlastbetrieb läuft dann sinngemäss wie beschrieben ab.

## Patentansprüche

1. Gasturbinenanordnung mit mindestens einer, in einen Hochdruckteil und in einen Basisteil gliederbaren, Gasturbine, mit mindestens einem Verdichter (1), mit mindestens einem Energietauscher (7), mit einer Brennkammeranordnung und mit mindestens einer, dem Energietauscher (7) unmittelbar vorgeschalteten separaten Brennkammer (18),
dadurch gekennzeichnet,
- dass für die Brennkammeranordnung mindestens zwei Brennkammern (9, 10) vorgesehen sind, und
- dass die erste (9) der mindestens zwei Brennkammern mit dem Hochdruckteil und die zweite (10) über den zwischengeschalteten Energietauscher (7) mit vorgeschalteter Brennkammer (18) mit dem Basisteil der Gasturbinenanordnung zusammenwirkt.

2. Gasturbinenanordnung nach Anspruch 1, dadurch gekennzeichnet,
- dass der Hochdruckteil als separate Hochdruckturbine (13) ausgebildet ist, welche einen ersten Generator (14) antreibt, und
- dass der Basisteil als separate, den Verdichter (1) und einen zweiten Generator (4) antreibende Basisturbine (3) ausgebildet ist.

3. Gasturbinenanordnung nach Anspruch 1, dadurch gekennzeichnet,
- dass der Hochdruckteil als separate Hochdruckturbine (13) ausgebildet ist,
- dass der Basisteil als separate, den Verdichter (1) antreibende Basisturbine (3) ausgebildet ist, und
- dass die Hochdruckturbine (13) und die Basisturbine (3) über ein Getriebe miteinander gekoppelt sind und gemeinsam einen Generator (4) antreiben.

4. Gasturbinenanordnung nach Anspruch 3, dadurch gekennzeichnet,
- dass der Hochdruckteil als Hochdruckturbine (13) und der Basisteil als Basisturbine (3) ausgebildet ist, und
- dass Hochdruckturbine (13) und Basisturbine (3) auf einer gemeinsamen Welle sitzen und gemeinsam den Verdichter (1) und einen Generator (4) antreiben.

5. Gasturbinenanordnung nach dem Oberbegriff des Anspruchs 1, dadurch gekennzeichnet,
- dass die Brennkammer anordnung eine Brennkammer (23) umfasst,
- dass in der Brennkammer (23) erzeugte Treibgase über eine Verzweigung aufgeteilt werden, sodass ein erster Teil der Treibgase in den Hochdruckteil und ein zweiter Teil der Treibgase über den zwischengeschalteten Energietauscher (7) mit vorgeschalteter Brennkammer (18) in den Basisteil der Gasturbinenanordnung geleitet wird.

6. Gasturbinenanordnung nach Anspruch 5, dadurch gekennzeichnet,
- dass die Verzweigung steuerbar ausgelegt ist.

7. Gasturbinenanordnung nach Anspruch 1, dadurch gekennzeichnet,
- dass den zwei Brennkammern (9, 10) durch eine sich verzweigende Leitung (8) Verbrennungsluft zugeführt wird, und
- dass diese Verzweigung steuerbar ausgelegt ist, sodass die zur jeweiligen Brennkammer (9, 10) strömende Menge der Verbrennungsluft regelbar ist.

8. Gasturbinenanordnung nach Anspruch 2, dadurch gekennzeichnet,
- dass Luft auf hohem Druckniveau vom Energietauscher (7) durch eine sich verzweigende Leitung (8) in die Brennkammern (9, 10) geleitet wird,
- dass in der Brennkammer (9) entstandenes Treibgas in die Hochdruckturbine (13) geleitet wird,
- dass in der Brennkammer (10) entstandenes Treibgas durch eine Leitung (17) in die Brennkammer (18) gelangt,
- dass die Brennkammer (18) unmittelbar vor dem Energietauscher (7) angeordnet ist und mit diesem zusammenwirkt, und
- dass aus dem Energietauscher (7) austretendes, teilweise entspanntes Treibgas zusammen mit aus der Hochdruckturbine (13) austretendem, teilweise entspanntem Treibgas in die Basisturbine (3) eingeleitet wird.

9. Verfahren zum Betreiben der Gasturbinenanordnung nach Anspruch 1, dadurch gekennzeichnet,
- dass bei einem Anfahrvorgang zuerst die zweite Brennkammer (10) gezündet wird,
- dass die separate Brennkammer (18) anschliessend gezündet und soweit angesteuert wird, bis die erzeugte Menge Treibgas nach dem Energietauscher (7) genügt, um die Basisturbine (3) in einen Leerlaufbetrieb zu bringen,
- dass zunächst zur Leistungssteigerung die separate Brennkammer (18) voll angesteuert wird,
- dass erst danach zur weiteren Leistungssteigerung die erste Brennkammer (9) gezündet und über den oberen Teillastbetrieb bis zum Vollastbetrieb angesteuert wird, und
- dass im Grundlastbetrieb die Leistung der Gasturbinenanordnung vorzugsweise nur über die Ansteuerung der Brennkammer (9) geregelt wird.

10. Verfahren zum Betreiben der Gasturbinenanordnung nach Anspruch 5, dadurch gekennzeichnet,
- dass bei einem Anfahrvorgang die Brennkammer (23) gezündet wird und Treibgas aus dieser Brennkammer (23) zunächst nur in Richtung separate Brennkammer (18) strömt,
- dass die separate Brennkammer (18) anschliessend gezündet und soweit angesteuert wird, bis die erzeugte Menge Treibgas nach dem Energietauscher genügt, um die Basisturbine (3) in einen Leerlaufbetrieb zu bringen,
- dass zunächst zur Leistungssteigerung die separate Brennkammer (18) voll angesteuert wird,
- dass erst danach die Brennkammer (23) weiter angesteuert wird und Treibgas in die Hochdruckturbine (13) strömt bis der obere Teillastbetrieb oder der Vollastbetrieb erreicht ist, und
- dass im Grundlastbetrieb die Leistung der Gasturbinenanordnung vorzugsweise nur über die Ansteuerung der Brennkammer (23) geregelt wird.

## Claims

1. Gas turbine arrangement with at least one gas turbine, which can be divided into a high-pressure part and a basic part, with at least one compressor (1), with at least one energy exchanger (7), with a combustion-chamber arrangement and with at least one separate combustion chamber (18) connected directly upsteam of the energy exchanger (7), characterized in that
- at least two combustion chambers (9, 10) are provided for the combustion-chamber arrangement and
- the first (9) of the combustion chambers, of which there are at least two, cooperates with the high-pressure part and the second (10) cooperates, via the interposed energy exchanger (7) having the upstream combustion chamber (18), with the basic part of the gas turbine arrangement.

2. Gas turbine arrangement according to Claim 1, characterized in that
- the high-pressure part is designed as a separate high-pressure turbine (13) which drives a first generator (14) and
- the basic part is designed as a separate basic turbine (3) which drives the compressor (1) and a second generator (4).

3. Gas turbine arrangement according to Claim 1, characterized in that
- the high-pressure part is designed as a separate high-pressure turbine (13),
- the basic part is designed as a separate basic turbine (3) which drives the compressor (1) and
- the high-pressure turbine (13) and the basic turbine (3) are coupled to one another via a transmission and jointly drive a generator (4).

4. Gas turbine arrangement according to Claim 3, characterized in that
- the high-pressure part is designed as a high-pressure turbine (13) and the basic part is designed as a basic turbine (3) and
- the high-pressure turbine (13) and the basic turbine (3) are seated on a common shaft and jointly drive the compressor (1) and a generator (4).

5. Gas turbine arrangement according to the precharacterising clause of Claim 1, characterized in that
- the combustion-chamber arrangement comprises a combustion chamber (23),
- driving gases produced in the combustion chamber (23) are divided via a branch, a first part of the driving gases thus being passed into the high-pressure part and a second part of the driving gases being passed via the interposed energy exchanger (7) having the upstream combustion chamber (18) into the basic part of the gas turbine arrangement.

6. Gas turbine arrangement according to Claim 5, characterized in that
- the branch is of controllable design.

7. Gas turbine arrangement according to Claim 1, characterized in that
- combustion air is fed to the two combustion chambers (9, 10) via a branching line (8) and
- this branch is of controllable design, allowing the quantity of combustion air flowing to the respective combustion chamber (9, 10) to be regulated.

8. Gas turbine arrangement according to Claim 2, characterized in that
- air at a high pressure level is passed from the energy exchanger (7) via a branching line (8) into the combustion chambers (9, 10),
- driving gas formed in combustion chamber (9) is passed into the high-pressure turbine (13),
- driving gas formed in combustion chamber (10) pass's via a line (17) into combustion chamber (18),
- combustion chamber (18) is arranged directly upstream of the energy exchanger (7) and cooperates with the latter and
- partially expanded driving gas emerging from the energy exchanger (7) is introduced into the basic turbine (3) together with partially expanded driving gas emerging from the high-pressure turbine (13).

9. Method for operating the gas turbine arrangement according to Claim 1, characterized in that
- during a starting process, the second combustion chamber (10) is first of all ignited,
- the separate combustion chamber (18) is then ignited and activated until the quantity of driving gas produced downstream of the energy exchanger (7) is sufficient to bring the basic turbine (3) into an idling mode,
- to increase the power, the separate combustion chamber (18) is first of all fully activated,
- only then is the first combustion chamber (9) ignited and activated via the upper part-load mode up to full-load mode to increase the power further and
- the power of the gas turbine arrangement in base-load mode is preferably regulated solely via the activation of combustion chamber (9).

10. Method for operating the gas turbine arrangement according to Claim 5, characterized in that
- during a starting process, combustion chamber (23) is ignited and driving gas from this combustion chamber (23) at first flows only in the direction of the separate combustion chamber (18),
- the separate combustion chamber (18) is then ignited and activated until the quantity of driving gas produced downstream of the energy exchanger is sufficient to bring the basic turbine (3) into an idling mode,
- to increase the power the separate combustion chamber (18) is first of all fully activated,
- only then is combustion chamber (23) further activated and driving gas flows into the high-pressure turbine (13) until the upper part-load mode or the full-load mode is reached and
- the power of the gas turbine arrangement in base-load mode is preferably regulated solely via the activation of combustion chamber (23).

## Revendications

1. Agencement de turbines à gaz avec au moins une turbine à gaz divisible en une partie à haute pression et une partie de base, avec au moins un compresseur (1), avec au moins un échangeur d'énergie (7), avec un agencement de chambres de combustion et avec au moins une chambre de combustion (18) séparée placée immédiatement avant l'échangeur d'énergie (7), caractérisé en ce que
- pour l'agencement de chambres de combustion il est prévu au moins deux chambres de combustion (9, 10); et en ce que
- la première (9) des au moins deux chambres de combustion coopère avec la partie à haute pression et la deuxième (10) coopère avec la partie de base de l'agencement de turbines par l'échangeur d'énergie (7) intermédiaire équipé de la chambre de combustion (18) préliminaire.

2. Agencement de turbines à gaz suivant la revendication 1, caractérisé en ce que
- la partie à haute pression est constituée par une turbine à haute pression (13) séparée, qui entraîne un premier générateur (14); et en ce que
- la partie de base est constituée par une turbine de base (3) séparée, entraînant le compresseur (1) et un second générateur (4).

3. Agencement de turbines à gaz suivant la revendication 1, caractérisé en ce que
- la partie à haute pression est constituée par une turbine à haute pression (13) séparée; en ce que
- la partie de base est constituée par une turbine de base (3) séparée entraînant le compresseur (1); et en ce que
- la turbine à haute pression (13) et la turbine de base (3) sont couplées l'une à l'autre par un train d'engrenages et entraînent ensemble un générateur (4).

4. Agencement de turbines à gaz suivant la revendication 3, caractérisé en ce que
- la partie à haute pression est constituée par une turbine à haute pression (13) et la partie de base est constituée par une turbine de base (3); et en ce que
- la turbine à haute pression (13) et la turbine de base (3) sont montées sur un arbre commun et entraînent ensemble le compresseur (1) et un générateur (4).

5. Agencement de turbines à gaz suivant le préambule de la revendication 1, caractérisé en ce que
- l'agencement de chambres de combustion comprend une chambre de combustion (23); et en ce que
- les gaz propulseurs produits dans la chambre de combustion (23) sont subdivisés par une bifurcation de telle sorte qu'une première partie des gaz propulseurs est introduite dans la partie à haute pression et qu'une seconde partie des gaz propulseurs est introduite, par l'échangeur d'énergie (7) intermédiaire équipé de la chambre de combustion préléminaire (18), dans la partie de base de l'agencement de turbines à gaz.

6. Agencement de turbines à gaz suivant la revendication 5, caractérisé en ce que
- la bifurcation est de conception réglable.

7. Agencement de turbines à gaz suivant la revendication 1, caractérisé en ce que
- de l'air de combustion est fourni aux deux chambres de combustion (9, 10) par une conduite (8) qui se subdivise; et en ce que
- cette bifurcation est de conception réglable, de telle sorte que le débit d'air de combustion circulant vers la chambre de combustion respective (9, 10) est réglable.

8. Agencement de turbines à gaz suivant la revendication 2, caractérisé en ce que
- de l'air à un haut niveau de pression est conduit de l'échangeur d'énergie (7) aux chambres de combustion (9, 10) par une conduite (8) qui se subdivise; en ce que
- le gaz propulseur formé dans la chambre de combustion (9) est conduit dans la turbine à haute pression (13); en ce que
- le gaz propulseur formé dans la chambre de combustion (10) arrive dans la chambre de combustion (18) par une conduite (17); en ce que
- la chambre de combustion (18) est disposée immédiatement avant l'échangeur d'énergie (7) et coopère avec celui-ci; et en ce que
- le gaz propulseur partiellement détendu, sortant de l'échangeur d'énergie (7), est introduit dans la turbine de base (3) en même temps que le gaz propulseur partiellement détendu sortant de la turbine à haute pression (13).

9. Procédé de conduite de l'agencement de turbines à gaz suivant la revendication 1, caractérisé en ce que
- dans une opération de démarrage, on allume d'abord la seconde chambre de combustion (10); en ce que
- on allume ensuite la chambre de combustion séparée (18) et on l'amorce jusqu'à ce que le débit de gaz propulseur produit après l'échangeur d'énergie (7) soit suffisant pour mettre en marche à vide la turbine de base (3); en ce que
- on active d'abord la chambre de combustion séparée (18) à fond pour augmenter la puissance; en ce que
- seulement alors, pour encore augmenter la puissance, on allume la première chambre de combustion (9) et on l'amène par le domaine supérieur de charge partielle jusqu'au domaine de la pleine charge; et en ce que
- dans la marche à charge de base, la puissance de l'agencement de turbines à gaz est de préférence réglée uniquement par la commande de la chambre de combustion (9).

10. Procédé de conduite de l'agencement de turbines à gaz suivant la revendication 5, caractérisé en ce que
- dans une opération de démarrage, on allume la chambre de combustion (23) et le gaz propulseur sortant de cette chambre de combustion (23) circule d'abord uniquement en direction de la chambre de combustion séparée (18); en ce que
- on allume ensuite la chambre de combustion séparée (18) et on l'amorce jusqu'à ce que le débit de gaz propulseur produit après l'échangeur d'énergie soit suffisant pour mettre en marche à vide la turbine de base (3); en ce que
- on active d'abord la chambre de combustion séparée (18) à fond pour augmenter la puissance; en ce que
- seulement alors, on active davantage la chambre de combustion (23) et le gaz propulseur circule dans la turbine à haute pression (13) jusqu'à ce que le domaine supérieur de charge partielle ou le domaine de la pleine charge soit atteint; et en ce que
- dans la marche à charge de base, la puissance de l'agencement de turbines à gaz est de préférence réglée uniquement par la commande de la chambre de combustion (23).
